# EUROPEAN PATENT SPECIFICATION

(11) **EP 4 578 766 B1**
(45) Date of publication and mention of the grant of the patent: **21.10.2026**
(21) Application number: 23383393.8
(22) Date of filing: 28.12.2023
(51) Int. Cl.: B62D 25/20, B62D 33/04

(54) **FLOOR STRUCTURE FOR A VEHICLE**
BODENSTRUKTUR FÜR EIN FAHRZEUG
STRUCTURE DE PLANCHER POUR UN VÉHICULE

(43) Date of publication of application: 02.07.2025
(73) Proprietor: SAS Knauf Industries Gestion, 68600 Wolfgantzen (FR)
(72) Inventor: FREIRE DE LA CRUZ, Jose Antonio, 68600 Wolfgantzen (FR); IGLESIAS GÓMEZ, Jorge, 68600 Wolfgantzen (FR)
(74) Representative: ABG Intellectual Property Law, S.L.

(56) References cited:
- EP-A1- 2 116 456
- DE-A1- 102014 113 822

## Description

### OBJECT OF THE INVENTION

The present invention is comprised in the sector of floors for vehicles. In particular, the invention relates to a multilayer floor structure for the cargo space preferably in land transport vehicles. In the preferred example, the vehicle will be a truck. However, the examples of vehicles which allow a floor according to any of the described examples are: ambulances, passenger transport vehicles, leisure vehicles such as campers or caravans, motor homes, buses, minibuses, airport buses, ships.

### BACKGROUND OF THE INVENTION

In many industries, particularly in the aeronautical and transportation industries, there is considerable impetus to reduce the weight of vehicle components. In many cases, for example, these weight reductions are necessary to meet designated fuel savings standards, which are becoming increasingly stricter.

Therefore, it has become common in the automotive sector, as well as in other transportation industries, to consider alternative designs for many vehicle components even when the alternative designs incur a cost penalty, as long as the resulting parts can achieve significant weight savings.

In any case, the reason is clear, every time the vehicle moves it must transport a mass equal to its own weight plus the load. Reducing its own weight therefore implies reducing a mass to be transported over the service life of the vehicle, and said savings are quantifiable in terms of fuel saved.

Another advantage of weight reduction in the vehicle structure is that, at a maximum tare weight, weight reduction itself translates into a greater load capacity and the transport of a larger load directly implies a greater benefit for the transport operator.

A specific type of floor is one that, in addition to seeking sufficient strength to support the load, also has thermal insulation requirements. This means that the floor must incorporate good thermal insulation that does not reduce the load-bearing capacity of the floor and allows the same loads to be transported while maintaining their temperature for as long as possible.

According to the prior art, floors of this type are constructed on the two main beams that constitute the main longitudinal structure, the one which extends from the area where the rotary platform for anchoring to the tractor unit is located and the rear part where the rear axle or axles are located, for example.

The known structures have barely or hardly changed for a long time and were constructed based on structure types that have fulfilled their function structurally but that, due to the relevance of such a structure, have not been effectively modified to overcome the problems initially addressed.

According to the prior art, a board protected at the lower portion thereof by means of a fiberglass protection is incorporated on the main beams and wooden slats are transversally screwed thereto and to the main beams, with the distribution thereof being irregular, leading to the determination that such distribution may not respond to an actual need.

Additionally, another board and a metal sheet are directly supported on the slats. The metal sheet directly receives the load. In turn, the board is supported on the slats to transmit the load to the lower board, which is in turn supported on the main beams. This support ensures the transmission of forces only through the load-bearing elements. Finally, thermal insulation is achieved by including a thermal insulating material between the slats, so the thermal insulation capacity only increases slightly since there is no thermal barrier through the slats and they give rise to a number of thermal bridges. Only the choice of woods with the lowest thermal conductivity will give rise to theoretically insulated floors but, as these woods are not the most resistant, this is not a choice seen in structures of this type.

Document EP 2 116 456 A1 discloses a floor structure for a land transport vehicle, wherein the floor structure is stratified and comprises: a first layer, a second sealing layer adapted to be exposed to the outside of the vehicle, a core plastic layer, and a third structural layer, the core layer comprises a plurality of open spaces on one of its faces, arranged spaced from one another.

In view of these structures, the present invention provides a new floor structure for cargo areas in vehicles, wherein not only the necessary strength requirements are achieved, but the thermal insulation is very high and thermal bridges are eliminated.

According to specific embodiments, this very structure allows installation in areas where the dimensions are very different without having to manufacture specific parts given that they allow a modular configuration that easily adapts to different configurations and areas.

### DESCRIPTION OF THE INVENTION

The main object of the present invention is to provide a specific floor structure for cargo areas in vehicles with improved thermal insulation and a reduction of its weight per unit area, in turn resulting in a reduction of transport costs. In particular, the reduction is a weight reduction, although the number of parts used for manufacturing same is also reduced, resulting in a floor structure that is more efficient in the terms already described and requires shorter construction time. The greater construction simplicity also results in a lower probability of failures during construction.

In a first inventive aspect, the present invention provides a floor structure for a vehicle according to claim 1. Dependent claims show preferred examples of the present invention.

The first inventive aspect is a floor structure for a vehicle, preferably a land transport vehicle, wherein *the floor structure is stratified and comprises:*
- *a first layer for protection against abrasion,*
- *a second sealing layer adapted to be exposed to the outside of the vehicle,*
- *a core plastic layer preferably having a reticulated structure, and*
- *a third structural layer adapted to support longitudinal structural elements, the third layer being interposed between the core layer and the second layer such that the core layer is arranged between the first layer and the second layer;*
*wherein*
- *the core layer comprises a plurality of grooves on one of its faces, the grooves being arranged spaced from one another and located between the core layer and the third structural layer; and wherein*
- *the longitudinal structural elements, preferably wooden or metallic longitudinal structural elements, are, each of them, housed in one of the grooves such that there is a distancing between the longitudinal structural elements and the first layer through the interposition of the core layer.*

The proposed structure is a stratified structure intended for forming the floor of a vehicle, preferably a land transport vehicle such as a truck.

The present structure is formed by a plurality of layers arranged stacked one on top of another, giving rise to the stratified structure. These layers are arranged parallel to one another according to a plane containing both the longitudinal direction of the vehicle and a transverse direction, the direction which in the operating mode corresponds to the horizontal direction and perpendicular to the longitudinal direction of the vehicle, such that the layers are superposed according to a vertical direction perpendicular to said plane. When the longitudinal direction of the vehicle is indicated, it should be understood as the direction of the main beams (longitudinal or travel direction of the vehicle) that support the load and are in turn supported on either the loading axles or on the rotary plates going to the traction unit, wherein these beams may have certain inclination and may not be completely horizontal in the operating mode. That is, the longitudinal direction and the transverse direction are the two directions taken as the reference directions in which the floor on which the load is supported extends.

The layers forming the present structure according to the vertical direction are described in detail below, and specifically, the layers will be identified in the order from top to bottom, i.e., from the innermost layer with respect to the vehicle to the outermost layer with respect to the vehicle.

Throughout the description, relative terms of the position of the layers in relation to the structure when it is assembled as a vehicle floor will be used. Although reference will be made to the position of the structure and its components in relation to the vehicle, this must likewise be interpreted as a position relative to the structure itself, without this depending on the actual vehicle. In this way, terms such as horizontal, vertical, longitudinal, transverse, upper, or lower will refer to the orientation that the layers adopt when they are already installed in the vehicle in the operating mode, particularly in the cargo area on which the floor is constructed as a support structure.

A first layer is adapted to protect against abrasion, to that end, it is a layer made of a material suitable for withstanding abrasion. The first layer is the layer closest to the inside of the vehicle when the structure operatively forms the floor of said vehicle, i.e., it is the layer farthest away from the outside of the vehicle.

This layer is, for example, the layer over which a pallet truck, which transport pallets in the loading process, rolls. Pallet truck is mentioned because its wheels impose a point load and generate the most demanding conditions during the loading process from the load-bearing viewpoint. These conditions were tested both experimentally and through numerical simulation to verify that the floor structure is strong enough in the presence of these loading conditions.

High abrasion resistance is important since this surface is directly exposed to both the load and the loading means such as a pallet truck or a loading forklift in handling conditions, causing friction and hauling of loads thereon.

The second layer provides sealing to the structure, i.e., it isolates the inside of the vehicle from the outside or the elements. This second layer is adapted to be exposed to the outside of the vehicle, i.e., is the outermost layer of the structure which forms the floor of the vehicle and is located in an opposite position according to the vertical direction with respect to the first layer. This layer receives the most demanding conditions, not only due to meteorological conditions but also to the presence of water, possible impacts from particles thrown off by wheels, etc.

A core layer is arranged on the second layer, spatially located between the first layer and the third layer, and is made of a plastic material and preferably with a reticulated closed-cell structure.

Expanded plastic material provides a very low thermal conductivity and is responsible for establishing an effective thermal barrier which thermally isolates the inside from the outside.

This core layer comprises a series of grooves parallel to one another and according to the longitudinal direction of the vehicle. The grooves are arranged on one of the faces of the core layer, preferably on the face which is oriented towards the outside of the vehicle or facing a third layer, the third layer also being interposed between the first and the second layers during stacking.

These grooves are in turn spaced from one another and located between the core layer and the third layer which is described below. Grooves shall be understood as a through slit or channel along the face of the core layer which is usually oriented towards the outside.

According to the preferred example, each groove comprises a base face oriented towards the outside of the vehicle or the second layer and two side faces substantially perpendicular to the base face.

Following this core layer, the third layer which is interposed between the core layer and the second layer is described, such that the core layer is then arranged between the first layer and the third layer; that is, the core layer is located on the third layer in the operating mode.

The third layer is a structural layer which contributes to the assembly forming a floor that behaves like a single part mechanically, adapted to support the components of the structure arranged thereon. In other words, this third layer acts a structural base or support for longitudinal structural elements arranged in the grooves of the core layer.

More specifically, longitudinal structural elements shall be understood as load-bearing elements which are preferably manufactured from wood or a metallic material. Each of these longitudinal structural elements is housed in a groove of the core layer. Preferably, when the floor structure is installed on the main beams of the vehicle, these longitudinal structural elements are oriented transversely with respect to said beams.

Furthermore, the present structure has a distancing between the longitudinal structural elements and the first layer through the interposition of the core layer. In this way, the longitudinal structural elements do not connect with both layers, each arranged on one side of the core layer.

The existence of a distancing between the longitudinal structural elements and the first layer through the interposition of the core layer must be interpreted as the compulsory existence of at least one segment between the first layer and the longitudinal structural elements, wherein the material is the material of the core layer. That is, the embodiments of the invention can interpose additional layers but, even in these specific examples, at least one portion of the material of the core layer must exist between the longitudinal structural elements and the first layer.

Compared to prior art solutions, the present multilayer structure is advantageously more lightweight since it eliminates certain materials such as long slats extending between boards, which reduces the weight of the section and accordingly improves fuel consumption efficiency.

In turn, the present floor structure eliminates the presence of thermal bridges, which provides a much smaller thermal transmittance per unit area, reducing energy consumption when there is a need to maintain the temperature inside the cargo area with thermal adaptation means such as chillers, and as a result fuel consumption is also reduced.

Furthermore, the present structure entails an increase in production capacity since the ease of assembly, the homogenization of construction conditions, the absence of a large number of slats, and a reduction of the materials to be used mean that not only costs are further reduced but construction errors are minimized.

The fact that the longitudinal structural elements do not extend from the lower layer to an upper layer of the structure, as occurs in the prior art solutions, as a result of the distancing provided by the core layer, allows improved insulation in the proposed structure.

In the prior art, there is a partiality to extending slats from a lower board to an upper board with the understanding that the thermal insulation only serves as a filler to insulate the areas that are not occupied by the load-bearing elements, and that eliminating such load-bearing elements would result in a floor that does not meet load specifications.

In contrast, according to this first aspect of the invention, the grooves have a base which imposes a distancing between the longitudinal structural elements and the first layer, with the material of the core layer, i.e., the plastic core layer, being interposed between both. This configuration means that it is the plastic core layer which transfers all the stresses generated by the load applied to the first layer to the third structural layer, in contrast to the teachings of the prior art.

It has been proven that this configuration distributes the loads applied on the first layer, even if said loads are point loads, giving rise to a load directly applied to the plastic core layer which is applied with a larger area, achieving that the resulting stress state in the plastic core layer does not exceed its maximum acceptable stress under the operating conditions. Furthermore, since a plastic core layer is always interposed between the first layer and the third structural layer, thermal insulation exists over the entire area of the constructed floor.

In one embodiment, *the grooves are through or blind grooves and are made on one of the faces of the core layer, preferably on the face which is facing or supported on the third layer.*

Advantageously, the construction of the floor allows a reverse order of assembly which facilitates its construction since it is possible to first install the longitudinal structural elements on the grooves of the core layer and then add the other elements to this assembly. Lastly, the assembly would be rotated 180 degrees about the longitudinal axis and screwed to the longitudinal beams. The construction ends with the incorporation of the first layer.

In this way, the core layer has an upper face which is oriented towards the inside of the vehicle or towards the first layer and the longitudinal structural elements are located below and housed in the grooves of the core layer. Furthermore, according to the preferred embodiment, the longitudinal structural elements have, each of them, an upper face also oriented towards the inside of the vehicle or the first layer. Between the upper face of the core layer and the upper face of the longitudinal structural elements is the distancing that corresponds with a specific thickness of the core layer. Therefore, the distancing goes from the upper face of any of the longitudinal structural elements to the outer face or surface of the core layer which is in contact with the first layer. According to the preferred example, the upper face of the longitudinal structural elements is supported on the base of the grooves, so the distancing condition is also verified between the base of the grooves and the first layer.

In one embodiment, *the longitudinal structural elements have, according to the cross-section thereof, a substantially rectangular shape.*

Advantageously, the structural elements show at least two parallel flat support faces which maximize load transmission and two also flat side faces which facilitate insertion into the grooves.

More particularly, *each longitudinal structural element extends along a groove or channel which in turn extends between two side faces of the longitudinal structural element, these faces preferably being perpendicular to the third structural layer of the floor structure.*

In one embodiment, *the core layer is made of a thermoplastic polymer material, preferably expanded polypropylene (EPP) and*/*or expanded polystyrene (EPS) and*/*or extruded polystyrene (XPS) and*/*or polyurethane foam (PUR), and more preferably expanded closed- or open-cell plastics.*

The fact that the present structure has a single core layer made of said materials is what makes the present structure more lightweight and reduces the use of certain materials.

In one embodiment, the material is an expanded closed-cell plastic with only a few cells left open on the surface of the core layer by a cutting operation. In another alternative embodiment, the material is an expanded closed-cell plastic even on the surface of the core layer since its grooved shape is manufactured by molding.

In one embodiment, *the first layer is made of a metallic material, preferably aluminum.*

Aluminum has a high strength against abrasion and a low specific weight.

In one embodiment, *the distancing between the longitudinal structural elements and the first layer is greater than 15 mm and less than 120 mm.*

Advantageously, these values are values experimentally determined as those in which equilibrium has been found between the load-bearing capacity of the core layer and its thermal insulation capacity since the plastic material of the core layer is interposed between the longitudinal structural elements and the first layer.

In one embodiment, *the grooves are spaced from one another by a distance comprised between the axes thereof of between 150 mm and 650 mm.*

The distancing between grooves also establishes the distancing between the longitudinal structural elements. It has been experimentally proven by means of numerical simulation techniques that these distancing ranges ensure a sufficient strength of the constructed floor and of the thermal insulation required for more common applications.

In one embodiment, *the grooves have a width comprised between 20 mm and 120 mm and a height comprised between 20 mm and 100 mm.*

These width and height ranges are the preferred ranges for establishing a floor thickness that is not excessive to reduce the cargo space of the vehicle and allows sufficient strength to support the load under normal operating conditions.

In one embodiment, *the first layer has a thickness comprised between 1 mm and 3 mm.*

Advantageously, a first metal layer in these thickness ranges allows point loads such as those exerted by a wheel to be distributed over on a sufficient area of the core layer so that it achieves a stress state that does not exceed its maximum acceptable stress while still being plastic. These values have been proven with steel and aluminum, for example.

In one embodiment, *the second layer has a thickness comprised between 1 mm and 3 mm*.

In reality, it has been verified that a layer in this thickness range is sufficient to ensure sealing, allows usual impacts by stones or other particles thrown off by the wheels of the vehicle, and has sufficient structural capacity when applied to the third layer.

In one embodiment, *the third layer or structural base has a thickness comprised between 5 mm and 12 mm.*

The third layer has a structural function given that it is on this layer that the longitudinal structural elements are arranged screwed to the main beams of the vehicle, going through this third layer. The indicated range has been proven to be the most suitable for complying with its structural function when it is part of the final structure of the floor according to the first inventive aspect.

In one embodiment, *the core layer has a thickness comprised between 60 mm and 150 mm*.

The core layer has a greater thickness given that there is a need to provide grooves along its height capable of housing the longitudinal structural elements and also to offer sufficient material on the grooves to establish a thermal barrier between the first layer and the longitudinal structural elements. This part of the core layer material located between the first layer and the longitudinal structural elements is narrower than the other parts of the core layer without grooves and in turn must be strong enough to accept the loads transmitted by the first layer in the presence of load. In these circumstances, the identified thickness range has proven to be sufficient to work, meeting the strength and also thermal insulation criteria under operating conditions.

In one embodiment, the mass of the floor structure per m² is comprised between 25 kg and 50 kg.

Combination of the preceding parameters for each of the layers allows establishing a weight per square meter of constructed floor area in this weight range so that the resulting support structure in the form of a floor complies with sufficient strength and thermal insulation specifications, and furthermore with a specific weight below those found in the prior art. Even if these criteria are more than met, the assembly is simpler and faster as will be described in the examples described using figures.

In one embodiment, *the core layer is configured by a plurality of preferably rectangular units in the form of a plate, wherein at least one of the faces is tongued and grooved.*

That is, the floor structure forms a unit and the core plate constitutes a continuous plate. According to this embodiment, the core layer is formed by attaching a plurality of preferably rectangular units in the form of a plate. That is, the attachment of two or more units in the form of a plate forms the core plate and the attachment between these units is by means of tonguing and grooving. This configuration of the core plate allows manufacturing parts having smaller dimensions which, once attached to one another, give rise to core plates having dimensions corresponding to the floor. According to this example, there are also units, preferably located at the ends of the core plate, having smaller dimensions that allow establishing an end finishing element to adapt the dimensions of the core plate to the final dimensions of the floor constructed according to the first inventive aspect.

### DESCRIPTION OF THE DRAWINGS

These and other features and advantages of the invention will become more apparent from the following detailed description of a preferred embodiment, given only by way of illustrative and non-limiting example in reference to the attached figures.
Figure 1 shows a perspective view of a floor structure according to the prior art in which some of the parts have been removed to facilitate visual access to the internal structure thereof.
Figure 2 shows a section view of the floor structure shown in Figure 1 and also according to the prior art.
Figure 3 shows a schematic section view of a floor structure according to an embodiment of the present invention.
Figure 4 shows a schematic exploded perspective view of a floor structure according to an embodiment of the present invention.
Figure 5 shows a perspective view of a complete floor according to an embodiment of the first aspect of the invention in which some of the components are shown in an exploded perspective view so as to allow visual access to various constructive details.
Figure 6 shows a perspective view of a complete floor according to another embodiment of the first aspect of the invention in which some of the components are shown in an exploded perspective view so as to allow visual access to various constructive details.
Figure 7 shows a perspective view of a complete floor according to another embodiment of the first aspect of the invention in which some of the components are shown in an exploded perspective view so as to allow visual access to various constructive details.

### DETAILED DESCRIPTION OF THE INVENTION

In order to understand the figures with respect to the prior art and the present invention, longitudinal direction will correspond to the longitudinal direction of the vehicle on which a floor structure is installed, with the longitudinal direction of the vehicle being the forward movement direction. The layers forming the floor structure are arranged parallel to one another according to a plane containing both the longitudinal direction of the vehicle and a transverse direction, wherein the transverse direction is the direction which, in the operating mode, corresponds to the horizontal direction and is perpendicular to the longitudinal direction of the vehicle, such that layers are stacked according to a vertical direction perpendicular to said plane. It is understood that the floor is essentially planar and horizontal and, if it had an inclination according to the travel direction of the vehicle, the longitudinal direction will also be inclined. It is understood that vertical direction is the direction of the action of gravity.

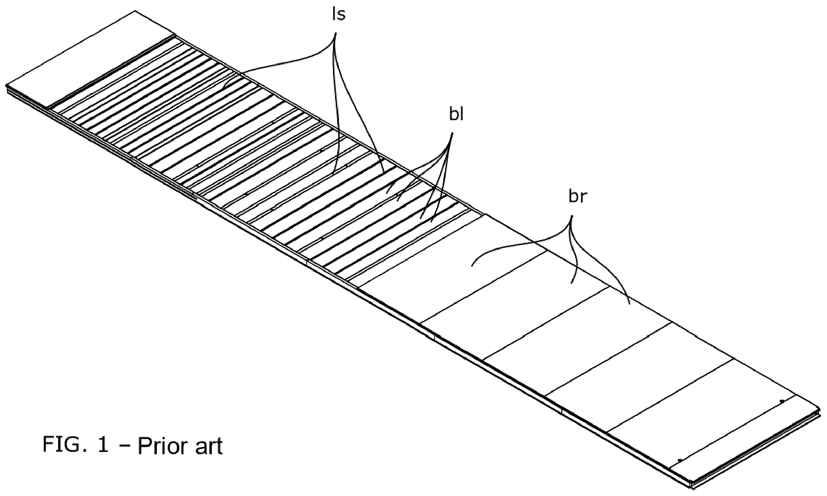

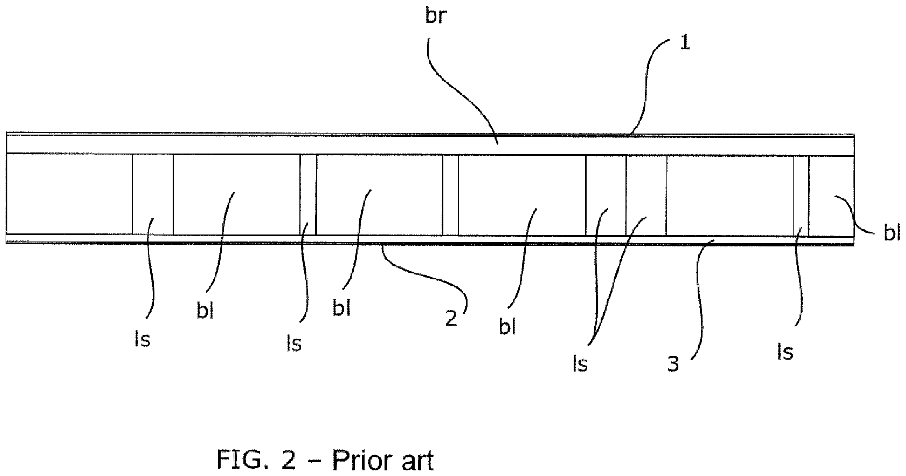

Figure 1 shows an example of a constructive solution for a vehicle floor as used in the prior art. This very constructive solution is seen in Figure 2, in this instance by means of the section of a portion of the floor structure.

According to the prior art, the floor structure is a structure intended for providing an area for supporting those loads that are housed inside the cargo space of the vehicle, wherein such loads are transmitted to the main beams of the vehicle which are part of its structure. These beams extend along a direction essentially oriented in the travel direction of the vehicle and are supported, for example, on an undercarriage or, for example, also on structural elements resting on rotating plates adapted to establish an anchoring with the traction unit. This last example when the cargo space is a trailer of an articulated vehicle.

The floor structure according to this embodiment in accordance with the prior art comprises a first metal layer (1), the layer which is directly accessible and on which the load rests. A plywood layer (br) serving as a structural element for receiving the load is arranged under the metal layer (1). There is a third plywood layer (3) also serving as a structural element in the lower part of the floor structure, and finally a second reinforcement layer (2) particularly for protection against water and impacts caused by particles that may be thrown off by the undercarriages.

Load transmission between the plywood layer (br) and the third layer (3) is by means of wooden slats (Is) which are in direct contact with both structural layers, i.e., on top with the plywood layer (br) from which it receives load and below with the third layer (3) to which it directly transmits the received load.

There are spaces between the slats (Is) which are occupied by blocks made of a material having a very low conductivity reducing heat transmission at least in the region between the slats in the direction perpendicular to the floor.

Figure 2 shows in detail how the slats (Is) transfer the supported load from the plywood layer (br) to the third layer (3). Furthermore, the structure shown in this example has a plurality of units of plywood layer (br) arranged one after another according to the longitudinal direction, supported on the slats which have been previously fixed to the third layer (3), as seen in Figure 1. In this example of the prior art, the distance between the wooden slats (Is), and therefore the width of the blocks (bl) made of a thermal insulation material arranged between the slats (Is), varies along the floor structure as can be seen in Figure 2 in accordance with the load density the lower part of the floor is expected to support, given that the responsibility for transmitting stresses in the central area of the floor structure due to the load falls on the slats (Is).

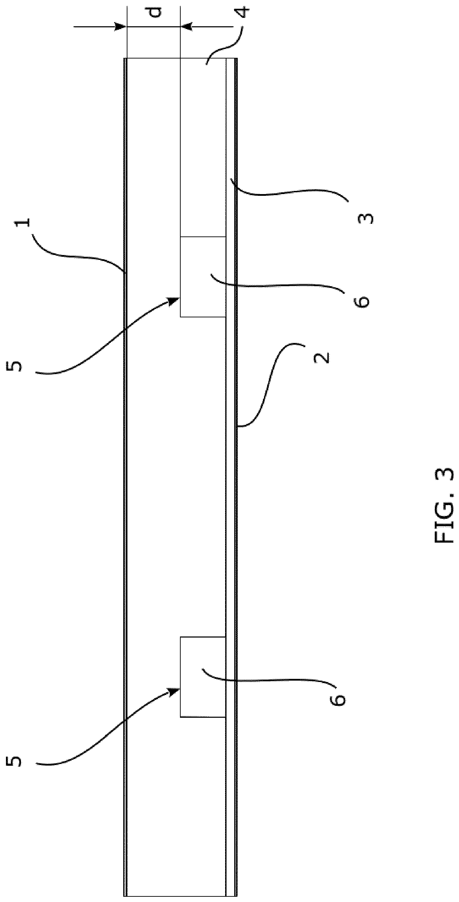

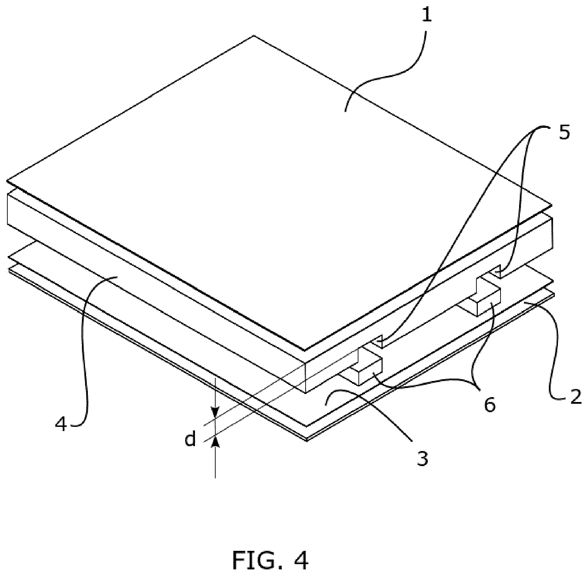

Figures 3 and 4 show an embodiment of a floor structure for a truck according to the present invention. In particular, Figure 3 shows a cross-section of the structure, whereas Figure 4 shows an exploded view of the different layers and/or components of the same structure shown in Figure 3.

The floor structure shown in both Figures 3 and 4 comprises an abrasion-resistant first layer (1) located in the upper part. After this first layer (1) and in a descending order, following the direction of the action of gravity, there is arranged a core plastic layer (4), followed by a third structural layer (3) and, lastly, a second sealing layer (2).

As seen in Figure 3, the core layer (4) is interposed between the first layer (1) and the third structural layer (3), whereas the second sealing layer (2) is arranged after the third layer (3) as an outer layer for protection against external agents or impact from particles. Therefore, the floor structure is formed by a plurality of layers arranged stacked one on top of another as can be seen in Figure 3, giving rise to a stratified structure. The first layer (1), the second layer (2), the third layer (3), and the core layer (4) are arranged parallel to one another according to the plane containing both the longitudinal direction of the vehicle and the transverse direction defined above; and these layers are stacked one on top of another, respectively, according to the vertical direction.

In particular, it should be noted that there is no plywood below the first layer (1), rather it is directly supported on the core layer (4), which allows the weight of the constructed floor to be drastically reduced.

The first layer (1) is made of aluminum and comprises a thickness between 1 mm and 3 mm. The core layer (4) is made of EPP and/or EPS and/or XPS and/or PUR, and comprises a thickness between 60 mm and 150 mm. In turn, this core layer (4) can be made of expanded closed- or open-cell plastics. The third structural layer (3) is made of a plywood material and has a thickness comprised between 5 mm and 12 mm. The second sealing layer (2) is made of a material composed of polyester and resin and comprises a thickness between 1 mm and 3 mm.

The core layer (4) comprises a plurality of through grooves (5) or blind grooves, configured as a channel, specifically Figures 3 and 4 show a rectangular portion of the floor in order to have visual access to the most relevant elements and to show them at a larger size with respect to the figures in which the entire constructed floor is show. These two figures show two grooves (5). These grooves (5) are distributed one after another along the core layer (4) according to a longitudinal direction on the lower face of the core layer (4), which is the face facing the third layer (3), i.e., the face opposite the face facing the first layer (1). Each groove (5) comprises a face parallel to any of the first layer (1), the second layer (2), the third layer (3), or the fourth layer (4), and two side faces perpendicular to said layers (1, 2, 3, 4).

In turn, the floor structure shown in these Figures 3 and 4 comprises two wooden or metallic longitudinal structural elements (6), each of them being housed in a groove (5). According to a cross-section (which can be seen in detail in Figure 3), these two longitudinal structural elements (6) have a substantially rectangular shape. Specifically, the longitudinal structural elements (6) extend along the direction imposed by the grooves (5), each groove (5) extending in turn between two side faces of the respective longitudinal structural element (6) so as to allow defining a housing which in this embodiment is adapted to the shape of the longitudinal structural element (6).

As seen in Figure 3, there is a distancing (d) between the upper face of the longitudinal structural elements (6) and the first layer (1). This distancing (d) is caused by the interposition of the core layer (4) between the longitudinal structural elements (6) and the first layer (1). According to this example, the distancing (d) is comprised between 15 mm and 120 mm. Furthermore, the distance between the axes of the grooves (5) is comprised between 150 mm and 650 mm. The grooves (5) have a width comprised between 20 mm and 120 mm and a height comprised between 20 mm and 100 mm.

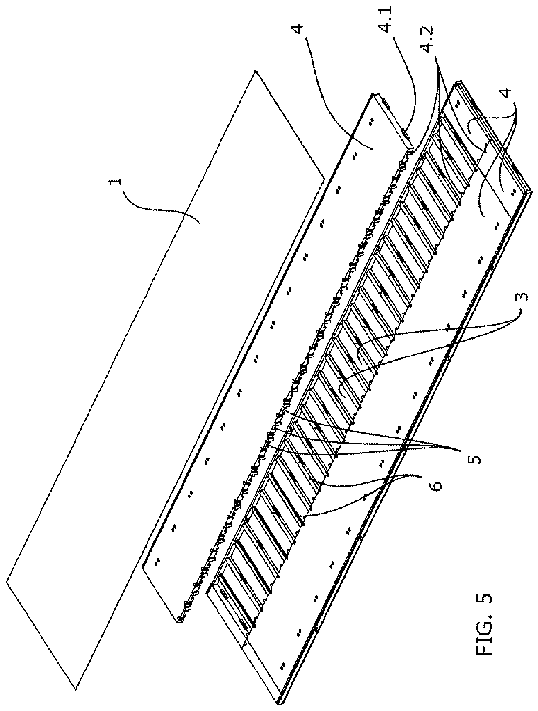

Figure 5 shows a perspective view of the complete floor of a truck according to an embodiment comprising, over a large part of its extension, two units of core layer (4) in the form of a plate having the same size, wherein each plate of core layer (4) comprises a first tongued and grooved side face (4.2) to be fixed with the other plate of core layer (4). These two plates of core layer (4) extend according to the longitudinal direction and the tonguing and grooving between them establishes an attachment according to the transverse direction.

In addition to these two plates of core layer (4), the floor shown in this Figure 5 also comprises two additional units of core layer (4) in the form of a plate having a smaller size. These two additional plates of core layer (4) are arranged at one end of the floor structure after the other plates having a larger size. In turn, the first two plates of core layer (4) comprise a second tongued and grooved face (4.1) for tonguing and grooving with the tongued and grooved faces of these two new plates having a smaller size. In this case, tonguing and grooving is carried out according to the longitudinal direction.

Figure 5 shows how one of the plates of core layer (4) having a larger size and the two plates of core layer (4) having a smaller size are supported on the longitudinal structural elements (6) and the third layer (3). Moreover, the other plate of core layer (4) having a larger size is shown in an exploded view in the figure so as to allow detailed viewing of the arrangement of the longitudinal structural elements (6) on the third layer (3) following a uniform distribution, that is, the longitudinal structural elements are evenly distributed. These plates of core layer (4) comprise a plurality of grooves (5), specifically the same number of grooves (5) as there are longitudinal structural elements (6).

The floor shown in Figure 5 further comprises a single first layer (1) which is arranged along the entire extension of the floor, as well as the second layer (2) and the third layer (3), all of them being common for all the plates of core layer (4).

Another advantage of this structure is the construction speed. Using an even distribution of the longitudinal structural elements (6) allows not having to differentiate the longitudinal structural elements (6) depending on their position, where their installation, for example, by screwing, is sufficient for the screwed attachment to reach the main beams of the cargo area on which the floor is installed. The next operation, which is faster, is the placement of a single plate covering a vast area that fits into the longitudinal structural elements (6). At most it is necessary to include the plates which are attached with tonguing and grooving along the length and completed at the end thereof to finally be adapted to the total length of the vehicle. This avoids having to include an insulation block for each gap left between consecutive longitudinal structural elements (6) and, additionally, a board that does not exist in this structure.

Figure 5 also shows the use of a different tonguing and grooving (4.1, 4.2) on the faces which allow attachment according to the longitudinal direction and according to the transverse direction. This allows the operator in charge of constructing the floor not to get confused when placing the parts and to carry out the construction of the floor faster.

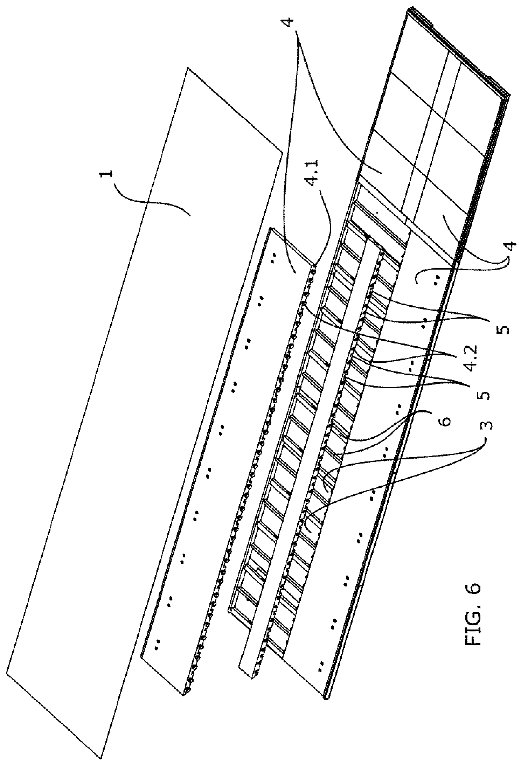

Figure 6 shows another example of a floor of a truck comprising a structure similar to that of Figure 5 with the difference that the structure has, over a large part of its extension, three units of core layer (4) in the form of a plate, two of these plates having one and the same size and a third plate having a smaller size than the other two located in the central area. In this example, the plate of core layer (4) having a smaller size is interposed between the other two plates of core layer (4) such that said interposed plate comprises two tongued and grooved faces (4.2) opposite one another such that each fits with the tongued and grooved side face of each corresponding plate of core layer (4).

In addition to these three plates of core layer (4), the floor also has other additional plates of core layer (4) having a smaller size arranged one after another at one end of the floor structure. The plates of core layer (4) having a larger size in turn have a second tongued and grooved face (4.1) for fitting with the tongued and grooved faces of the plates having a smaller size which are closest to the plates having a larger size.

The number of plate configurations to be manufactured is reduced, allowing different areas to be covered, wherein the main plates cover most of the area to be constructed and the small plates allow completing the space to be constructed both transversely with the central part of the core layer (4) and with the parts located at the end which corresponds to the front of the vehicle, for example.

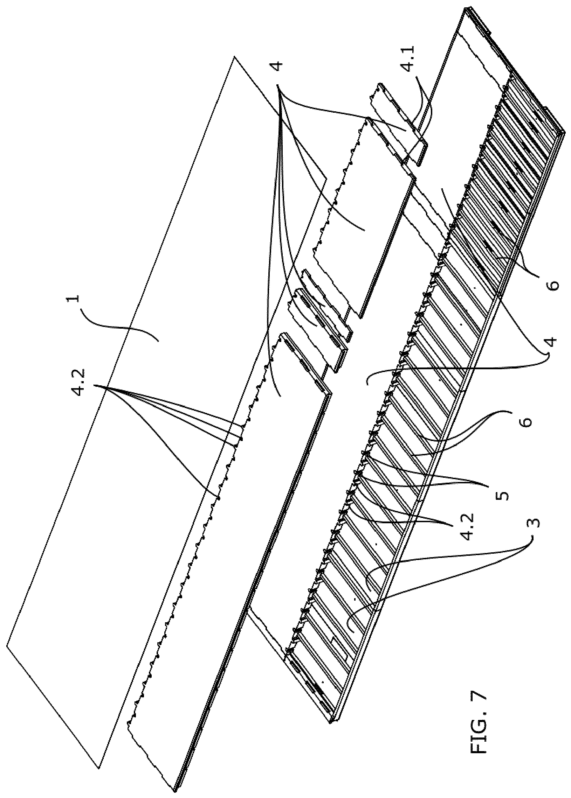

Figure 7 shows another example of a floor of a truck comprising a structure similar to the combination of the structure of Figures 5 and 6. In this figure, the first layer (1) and one side of the units of the core layer (4) has been separated in an exploded perspective view to allow having visual access to the internal structure of this embodiment. That is, the structure of Figure 7 shows two groups of first units of core layer (4) in the form of a plate, one arranged on the longitudinal structural elements (6) and the third layer (3), whereas the other first plate is shown in an exploded view. The first units of core layer (4) configured in the form of a plate are those having a larger size, and accordingly would occupy a large part of the extension of the structure. In turn, this structure shows second units of core layer (4) in the form of a plate having a smaller size. These second plates having a smaller size are arranged at one of the ends of the structure, whereas the other two first plates of core layer (4) having a larger size extend from the other opposite end of the structure.

Furthermore, six plates of core layer (4) are in turn arranged interposed between the first plates of core layer (4) having a larger size and the second plates of core layer (4) having a smaller size. The plates having a smaller size allow constructing a floor which is adapted to very different lengths. Examples of vehicles which allow a floor according to any of the described examples are: ambulances, passenger transport vehicles, leisure vehicles such as campers or caravans, motor homes, buses, minibuses, airport buses, ships.

The interposed plates comprise two tongued and grooved faces (4.2) opposite one another such that each fits with the tongued and grooved side face of each corresponding plate of core layer (4). This side tonguing and grooving allows adapting the width of the floor by linking the plates. Likewise, the plates comprise tongued and grooved faces (4.1) oriented according to the longitudinal direction, this tonguing and grooving allows adapting the length of the constructed floor by linking the plates according to the longitudinal direction.

The combination of plates having different sizes allows manufacturing standardized plates which, when suitably combined, allow constructing floors with very different dimensions.

Unlike Figure 5 which shows that the longitudinal structural elements (6) are evenly distributed along the entire extension of the structure, another configuration can be seen in Figure 7. In particular, the longitudinal structural elements (6) which are housed in the grooves (5) of the first plates of core layer (4) having a larger size and the interposed plates of core layer (4) having a smaller size are spaced from one another evenly by a first distance. However, the longitudinal structural elements (6) which are housed in the grooves (5) of the second plates of core layer (4) having a smaller size arranged at the end of the structure and the interposed plates having a larger size are spaced from one another evenly by a second distance which is smaller than the first distance. Therefore, the distancing between longitudinal structural elements (6) changes by segments in the structure according to this embodiment along the longitudinal direction.

It can also be seen both in Figure 5 and in Figures 6 and 7 that once the plates forming the core layer (4) are installed, the entire generated surface on which the first plate (1) rests is formed from a material with a low thermal conductivity, so there are no thermal bridges.

Furthermore, the first plate (1) is responsible for distributing concentrated loads and establishing a stress state of the core layer (4) without stress concentration, which allows not having to establish direct support of the first plate (1) on the longitudinal structural elements (6).

## Claims

1. Floor structure for a vehicle, preferably a land transport vehicle, wherein the floor structure is stratified and comprises:
- a first layer (1) for protection against abrasion,
- a second sealing layer (2) adapted to be exposed to the outside of the vehicle,
- a core plastic layer (4) preferably having a reticulated structure, and
- a third structural layer (3) adapted to support longitudinal structural elements (6), the third layer (3) being interposed between the core layer (4) and the second layer (2) such that the core layer (4) is arranged between the first layer (1) and the third layer (3);
wherein
- the core layer (4) comprises a plurality of grooves (5) on one of its faces, the grooves (5) being arranged spaced from one another and located between the core layer (4) and the third structural layer (3); and wherein
- the longitudinal structural elements (6), preferably wooden or metallic longitudinal structural elements, are, each of them (6), housed in one of the grooves (5) such that there is a distancing (d) between the longitudinal structural elements (6) and the first layer (1) through the interposition of the core layer (4).

2. Floor structure according to the preceding claim, wherein the grooves (5) are through or blind grooves and are made on one of the faces of the core layer (4), preferably on the face which is facing or supported on the third layer (3).

3. Floor structure according to any of the preceding claims, wherein the longitudinal structural elements (6) have, according to the cross-section thereof, a substantially rectangular shape.

4. Floor structure according to the preceding claim, wherein each longitudinal structural element (6) extends along a groove or channel (5) which in turn extends between two side faces of the longitudinal structural element (6), these faces preferably being perpendicular to the third structural layer (3) of the floor structure.

5. Floor structure according to any of the preceding claims, wherein the core layer (4) is made of a thermoplastic polymer material, preferably expanded polypropylene (EPP) and/or expanded polystyrene (EPS) and/or extruded polystyrene (XPS) and/or polyurethane foam (PUR), and more preferably expanded closed- or open-cell plastics.

6. Floor structure according to any of the preceding claims, wherein the first layer (1) is made of a metallic material, preferably aluminum.

7. Floor structure according to any of the preceding claims, wherein the distancing (d) between the longitudinal structural elements (6) and the first layer (1) is greater than 15 mm and less than 120 mm.

8. Floor structure according to any of the preceding claims, wherein the grooves (5) are spaced from one another by a distance comprised between the axes thereof of between 150 mm and 650 mm.

9. Floor structure according to any of the preceding claims, wherein the grooves (5) have a width comprised between 20 mm and 120 mm, and a height comprised between 20 mm and 100 mm.

10. Floor structure according to any of the preceding claims, wherein the first layer (1) has a thickness comprised between 1 mm and 3 mm.

11. The floor structure according to any of the preceding claims, wherein the second layer (2) has a thickness comprised between 1 mm and 3 mm.

12. Floor structure according to any of the preceding claims, wherein the third structural layer (3) has a thickness comprised between 5 mm and 12 mm.

13. Floor structure according to any of the preceding claims, wherein the core layer (4) has a thickness comprised between 60 mm and 150 mm.

14. Floor structure according to any of the preceding claims, wherein the mass of the floor structure per m² is comprised between 25 kg and 50 kg.

15. Floor structure according to any of the preceding claims, wherein the core layer (4) is configured by a plurality of preferably rectangular units in the form of a plate, wherein at least one of the faces is tongued and grooved.

## Patentansprüche

1. Bodenstruktur für ein Fahrzeug, vorzugsweise ein Landtransportfahrzeug, wobei die Bodenstruktur mehrschichtig aufgebaut ist und Folgendes umfasst:
- eine erste Schicht (1) zum Schutz gegen Abrieb,
eine zweite Dichtungsschicht (2), die dazu ausgebildet ist, der Außenseite des Fahrzeugs ausgesetzt zu sein,
eine Kunststoff-Kernschicht (4), die vorzugsweise eine netzartige Struktur aufweist, und
eine dritte Strukturschicht (3), die dazu ausgebildet ist, Längsstrukturelemente (6) zu tragen,
wobei die dritte Schicht (3) zwischen der Kernschicht (4) und der zweiten Schicht (2) angeordnet ist, derart, dass die Kernschicht (4) zwischen der ersten Schicht (1) und der dritten Schicht (3) angeordnet ist;
wobei
die Kernschicht (4) an einer ihrer Flächen eine Vielzahl von Nuten (5) umfasst, wobei die Nuten (5) voneinander beabstandet angeordnet und zwischen der Kernschicht (4) und der dritten Strukturschicht (3) angeordnet sind; und wobei die Längsstrukturelemente (6), vorzugsweise Längsstrukturelemente aus Holz oder Metall, jeweils (6) in einer der Nuten (5) aufgenommen sind, derart, dass durch die Zwischenanordnung der Kernschicht (4) ein Abstand (d) zwischen den Längsstrukturelementen (6) und der ersten Schicht (1) vorhanden ist.

2. Bodenstruktur nach dem vorhergehenden Anspruch, wobei die Nuten (5) durchgehende Nuten oder Sacknuten sind und auf einer der Flächen der Kernschicht (4) ausgebildet sind, vorzugsweise auf der Fläche, die der dritten Schicht (3) zugewandt ist oder auf dieser aufgestützt ist.

3. Bodenstruktur nach einem der vorhergehenden Ansprüche, wobei die Längsstrukturelemente (6) gemäß ihrem Querschnitt eine im Wesentlichen rechteckige Form aufweisen.

4. Bodenstruktur nach dem vorhergehenden Anspruch, wobei sich jedes Längsstrukturelement (6) entlang einer Nut oder eines Kanals (5) erstreckt, die bzw. der sich wiederum zwischen zwei Seitenflächen des Längsstrukturelements (6) erstreckt, wobei diese Flächen vorzugsweise senkrecht zu der dritten Strukturschicht (3) der Bodenstruktur verlaufen.

5. Bodenstruktur nach einem der vorhergehenden Ansprüche, wobei die Kernschicht (4) aus einem thermoplastischen Polymermaterial, vorzugsweise expandiertem Polypropylen (EPP) und/oder expandiertem Polystyrol (EPS) und/oder extrudiertem Polystyrol (XPS) und/oder Polyurethanschaum (PUR), und besonders bevorzugt aus expandierten geschlossenzelligen oder offenzelligen Kunststoffen hergestellt ist.

6. Bodenstruktur nach einem der vorhergehenden Ansprüche, wobei die erste Schicht (1) aus einem metallischen Material, vorzugsweise Aluminium, hergestellt ist.

7. Bodenstruktur nach einem der vorhergehenden Ansprüche, wobei der Abstand (d) zwischen den Längsstrukturelementen (6) und der ersten Schicht (1) größer als 15 mm und kleiner als 120 mm ist.

8. Bodenstruktur nach einem der vorhergehenden Ansprüche, wobei die Nuten (5) voneinander um einen zwischen ihren Achsen liegenden Abstand zwischen 150 mm und 650 mm beabstandet sind.

9. Bodenstruktur nach einem der vorhergehenden Ansprüche, wobei die Nuten (5) eine Breite zwischen 20 mm und 120 mm und eine Höhe zwischen 20 mm und 100 mm aufweisen.

10. Bodenstruktur nach einem der vorhergehenden Ansprüche, wobei die erste Schicht (1) eine Dicke zwischen 1 mm und 3 mm aufweist.

11. Die Bodenstruktur nach einem der vorhergehenden Ansprüche, wobei die zweite Schicht (2) eine Dicke zwischen 1 mm und 3 mm aufweist.

12. Bodenstruktur nach einem der vorhergehenden Ansprüche, wobei die dritte Strukturschicht (3) eine Dicke zwischen 5 mm und 12 mm aufweist.

13. Bodenstruktur nach einem der vorhergehenden Ansprüche, wobei die Kernschicht (4) eine Dicke zwischen 60 mm und 150 mm aufweist.

14. Bodenstruktur nach einem der vorhergehenden Ansprüche, wobei die Masse der Bodenstruktur pro m² zwischen 25 kg und 50 kg liegt.

15. Bodenstruktur nach einem der vorhergehenden Ansprüche, wobei die Kernschicht (4) durch eine Vielzahl von vorzugsweise rechteckigen Einheiten in Plattenform gebildet ist, wobei mindestens eine der Flächen mit Nut und Feder versehen ist.

## Revendications

1. Structure de plancher pour un véhicule, de préférence un véhicule de transport terrestre, dans laquelle la structure de plancher est stratifiée et comprend :
- une première couche (1) de protection contre l'abrasion,
une deuxième couche d'étanchéité (2) adaptée pour être exposée à l'extérieur du véhicule,
une couche plastique centrale (4) ayant de préférence une structure réticulée, et
une troisième couche structurelle (3) adaptée pour supporter des éléments structurels longitudinaux (6),
la troisième couche (3) étant interposée entre la couche centrale (4) et la deuxième couche (2) de telle sorte que la couche centrale (4) est disposée entre la première couche (1) et la troisième couche (3) ;
dans laquelle
la couche centrale (4) comprend une pluralité de rainures (5) sur l'une de ses faces, les rainures (5) étant disposées espacées les unes des autres et situées entre la couche centrale (4) et la troisième couche structurelle (3) ; et dans laquelle
les éléments structurels longitudinaux (6), de préférence des éléments structurels longitudinaux en bois ou métalliques, sont, chacun d'eux (6), logés dans l'une des rainures (5) de telle sorte qu'il existe un espacement (d) entre les éléments structurels longitudinaux (6) et la première couche (1) par l'interposition de la couche centrale (4).

2. Structure de plancher selon la revendication précédente, dans laquelle les rainures (5) sont des rainures traversantes ou aveugles et sont réalisées sur l'une des faces de la couche centrale (4), de préférence sur la face qui est tournée vers ou supportée par la troisième couche (3).

3. Structure de plancher selon l'une quelconque des revendications précédentes, dans laquelle les éléments structurels longitudinaux (6) ont, selon leur section transversale, une forme sensiblement rectangulaire.

4. Structure de plancher selon la revendication précédente, dans laquelle chaque élément structurel longitudinal (6) s'étend le long d'une rainure ou d'un canal (5) qui à son tour s'étend entre deux faces latérales de l'élément structurel longitudinal (6), ces faces étant de préférence perpendiculaires à la troisième couche structurelle (3) de la structure de plancher.

5. Structure de plancher selon l'une quelconque des revendications précédentes, dans laquelle la couche centrale (4) est fabriquée en un matériau polymère thermoplastique, de préférence en polypropylène expansé (EPP) et/ou en polystyrène expansé (EPS) et/ou en polystyrène extrudé (XPS) et/ou en mousse de polyuréthane (PUR), et plus préférablement en plastiques expansés à cellules fermées ou ouvertes.

6. Structure de plancher selon l'une quelconque des revendications précédentes, dans laquelle la première couche (1) est fabriquée en un matériau métallique, de préférence en aluminium.

7. Structure de plancher selon l'une quelconque des revendications précédentes, dans laquelle l'espacement (d) entre les éléments structurels longitudinaux (6) et la première couche (1) est supérieur à 15 mm et inférieur à 120 mm.

8. Structure de plancher selon l'une quelconque des revendications précédentes, dans laquelle les rainures (5) sont espacées les unes des autres d'une distance comprise entre les axes de celles-ci de 150 mm à 650 mm.

9. Structure de plancher selon l'une quelconque des revendications précédentes, dans laquelle les rainures (5) ont une largeur comprise entre 20 mm et 120 mm, et une hauteur comprise entre 20 mm et 100 mm.

10. Structure de plancher selon l'une quelconque des revendications précédentes, dans laquelle la première couche (1) a une épaisseur comprise entre 1 mm et 3 mm.

11. La structure de plancher selon l'une quelconque des revendications précédentes, dans laquelle la deuxième couche (2) a une épaisseur comprise entre 1 mm et 3 mm.

12. Structure de plancher selon l'une quelconque des revendications précédentes, dans laquelle la troisième couche structurelle (3) a une épaisseur comprise entre 5 mm et 12 mm.

13. Structure de plancher selon l'une quelconque des revendications précédentes, dans laquelle la couche centrale (4) a une épaisseur comprise entre 60 mm et 150 mm.

14. Structure de plancher selon l'une quelconque des revendications précédentes, dans laquelle la masse de la structure de plancher par m² est comprise entre 25 kg et 50 kg.

15. Structure de plancher selon l'une quelconque des revendications précédentes, dans laquelle la couche centrale (4) est configurée par une pluralité d'unités de préférence rectangulaires en forme de plaque, dans laquelle au moins l'une des faces est rainurée et languetée.
